# EUROPEAN PATENT APPLICATION

(11) **EP 4 603 162 A1**
(43) Date of publication of application: **20.08.2025**
(21) Application number: 25157909.0
(22) Date of filing: 14.02.2025
(51) Int. Cl.: A63F 13/533, A63F 13/792

(54) **PROGRAM, PROVISION MANAGEMENT DEVICE, AND GAMING DEVICE**

(30) Priority: 16.02.2024 JP 2024022283
(71) Applicant: Bandai Co., Ltd., Tokyo 111-8081 (JP)
(72) Inventor: TAKEDA, Satoshi, Tokyo, 111-8081 (JP); SAITO, Masahiko, Tokyo, 111-8081 (JP); MITA, Kensuke, Tokyo, 111-8081 (JP)
(74) Representative: Studio Torta S.p.A.

(57) **Abstract**

There is provided a program causing a computer to function as a provision control unit configured to provide a game element used for trading in a game based on one of a first provided amount and a second provided amount which are exchangeable with a predetermined price. The provision control unit is configured to perform control so that a number of times for which the game element is providable based on the second provided amount is smaller than a number of times for which the game element is providable based on the first provided amount.

## Description

### BACKGROUND OF THE INVENTION

### 1. Field of the Invention

The present invention relates to a program, a provision management device, and a gaming device.

### 2. Description of the Related Art

In recent years, game systems have been widespread which provide games to the terminals of players through a communication network. The server of the game systems provides various game elements usable for games (for example, Japanese Unexamined Patent Application Publication No. 2015-047516).

### SUMMARY OF THE INVENTION

In the game system as described above, it is an important task to devise the types of game elements provided to players and the method for presenting the game elements to continue the interest of the players to the games. As a result, games with improved enjoyment for players are provided.

Thus, it is an object of the present invention to provide a program, a provision management device, and a gaming device that can provide games with improved enjoyment for players.

An aspect of the present invention provides a program causing a computer to function as a provision control unit configured to provide a game element used for trading in a game based on one of a first provided amount and a second provided amount which are exchangeable with a predetermined price. The provision control unit is configured to perform control so that a number of times for which the game element is providable based on the second provided amount is smaller than a number of times for which the game element is providable based on the first provided amount.

An aspect of the present invention provides a provision management device including a provision control unit configured to provide a game element used for trading in a game based on one of a first provided amount and a second provided amount which are exchangeable with a predetermined price. The provision control unit is configured to perform control so that a number of times for which the game element is providable based on the second provided amount is smaller than a number of times for which the game element is providable based on the first provided amount.

An aspect of the present invention provides a program causing a computer to function as: a presentation control unit configured to selectably present provision of a game element based on a first provided amount exchangeable with a predetermined price, and provision of a game element based on a second provided amount exchangeable with the predetermined price; and a grant control unit configured to grant the game element based on selected one of the first provided amount and the second provided amount. The game element is used for trading in a game, and the grant control unit is configured to perform control so that a number of times for which the game element is grantable based on the second provided amount is smaller than a number of times for which the game element is grantable based on the first provided amount.

An aspect of the present invention provides a gaming device including: a presentation control unit configured to selectably present provision of a game element based on a first provided amount exchangeable with a predetermined price, and provision of a game element based on a second provided amount exchangeable with the predetermined price; and a grant control unit configured to grant the game element based on selected one of the first provided amount and the second provided amount. The game element is used for trading in a game, and the grant control unit is configured to perform control so that a number of times for which the game element is granted based on the second provided amount is smaller than a number of times for which the game element is granted based on the first provided amount.

According to the present invention, a highly enjoyable game can be provided.

### BRIEF DESCRIPTION OF THE DRAWINGS

Fig. 1 is a view illustrating an entire configuration example of a game system in the present embodiment;
Fig. 2 is a view illustrating a device configuration example of a laptop PC which is an example of a player terminal;
Fig. 3 is a view for explaining an example of the front surface of a leader card;
Fig. 4 is a view for explaining an example of the back surface of the leader card;
Fig. 5 is a view for explaining an example of the front surface of a battle card;
Fig. 6 is a view for explaining an example of the back surface of the battle card;
Fig. 7 is a view for explaining an example of the front surface of an extra card;
Fig. 8 is a block diagram illustrating a functional configuration example of the player terminal;
Fig. 9 is a table illustrating an example of a player information database;
Fig. 10 is a table illustrating an example of a game element information database;
Fig. 11 is a view illustrating an example of a home screen;
Fig. 12 is a view illustrating an example of a store screen;
Fig. 13 is a view illustrating an example of a store screen;
Fig. 14 is a view illustrating an example of display of currently tradable game elements and currently untradable game elements on the store screen;
Fig. 15 is a view illustrating an example of display of breakdown between paid-for and free of charge in-game currency units currently possessed;
Fig. 16 is a view illustrating an example of an in-game currency providing screen;
Fig. 17 is a view illustrating an example of when the number of times of provision (grant) of a first paid-for currency pack has reached an upper limit, resulting in a sold-out state;
Fig. 18 is a view illustrating an example of a screen to be displayed when the in-game currency for the price of a game element is insufficient;
Fig. 19 is a block diagram illustrating a functional configuration example of a game server;
Fig. 20 is a table illustrating an example of a user information management database;
Fig. 21 is a table illustrating an example of a game element management database;
Fig. 22 is a table illustrating an example of a store management database;
Fig. 23 is a sequence diagram for explaining the operation of the player terminal and the game server;
Fig. 24 shows tables for explaining determination as to whether each game element is providable (grantable) or unprovidable (ungrantable);
Fig. 25 is a view illustrating an example of a notification made when the total charge exceeds a predetermined amount; and
Fig. 26 shows views for explaining modification 2 of the embodiment.

### DESCRIPTION OF THE PREFERRED EMBODIMENTS

### Entire Configuration

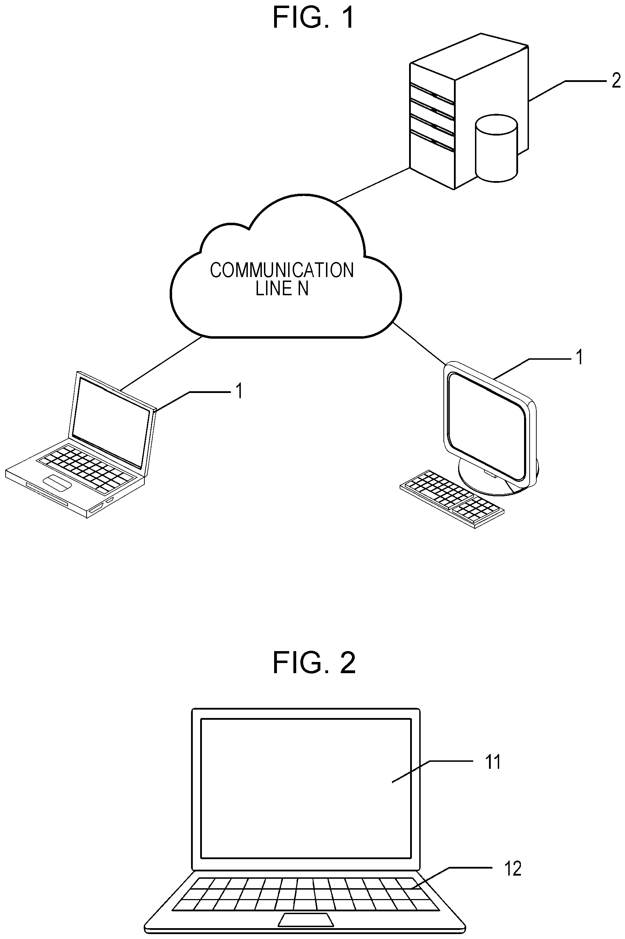

Fig. 1 is a view illustrating an entire configuration example of a game system in the present embodiment. As illustrated in Fig. 1, the game system includes a player terminal 1, and a game server 2 which are prepared for players A, B of a game. The player terminal 1 and the game server 2 are connectable to a communication line N, and can communicate with each other.

The communication line N indicates a communications path that enables data communication. For example, in addition to a dedicated line (dedicated cable) for direct connection and LAN based on the Ethernet (registered trademark), the communication line N includes a communication network such as a telecommunication network, a cable network, and the Internet, and the communication method may be wired or wireless.

The player terminal 1 is a computer that can execute a game program, and can perform data communication with the game server 2 by connecting to the communication line N through a wireless communication base station. The player terminal 1 is e.g., a personal computer, a smartphone, a mobile phone, a mobile gaming device, a stationary game console, a commercial game console, a tablet computer, and a controller for a stationary game console. Basically, multiple player terminals 1 are provided, and are operated by respective players.

The game server 2 is a server system that includes a single or multiple server devices and storage devices. The game server 2 provides various services for administering the games of the present embodiment, and is capable of managing data necessary for the administration of the games, and of distributing game programs and data necessary for execution of the games at the player terminals 1.

Fig. 2 is a view illustrating a device configuration example of a laptop PC which is an example of the player terminal 1. As illustrated in Fig. 2, the player terminal 1 includes a display 11, and a keyboard 12 which is an operation unit. The player terminal 1 is provided with a control board, a built-in battery, a power button, a sound volume adjustment button, a speaker, and the like which are not illustrated.

The control board is equipped with various microprocessors, ASIC such as a CPU, a GPU, and a DSP; various IC memories such as a VRAM, a RAM, and a ROM; and a wireless communication module to wirelessly communicate with a mobile phone base station. In addition, the control board is equipped with so-called an I/F circuit (interface circuit) such as a driver circuit of a touch operation panel 12. The elements mounted on the control board are electrically coupled to each other through a bus circuit so that reading and writing of data and transmission and reception of signals are made possible.

Multiple types of game elements appear in the game in the present embodiment. Each game element will be described below.

### First Type Game Element

A first type game element is an article into which a character is transformed, and is represented as an image. The image includes a still image and a video. The article may be an intangible object or a tangible object. The article is e.g., a virtual game card displayed on a computer, or a tangible game card. Note that the article is not limited to the card as long as the article is configured to identify the game element associated with the article. The article may be a modeled object such as a figure having the appearance of a game element. In the following, a case will be described as an example where the first type game element is a virtual game card into which a character is transformed.

In the game in the present embodiment, game card as the first type game element has multiple types. The information written on the front surface of a game card varies with the type of the game card. Although any number of types of game card may be provided, in the following, a description will be given using an example of three types of game cards: a leader card 21 (a first type first game element), a battle card 22 (a first type second game element), and an extra card 23 (a first type third game element). The common point among all types of game cards is that a character image in a work is associated with each game card. The character image is the image of a character that appears in a work, and in the present embodiment, the image of a scene including the character that appears in a work is also described as a character image. Multiple game cards with the same character and different picture patterns are provided, and treated as different game cards.

A player constructs a deck in advance using obtained game cards, and plays a game. When a deck is constructed, the total number of cards in the deck and the number of various types of cards are predetermined. In the present embodiment, a description will be given using an example of a deck with the total number of 50 cards including one leader card 21; however, the deck may have any number of cards as long as the number of cards is predetermined.

Each game card has a regular position, in which the content written on the game card as seen from a player can be determined as it is. Multiple position states of the game card are provided. In the following description, a state in which the game card is in regular position is called an active state, and a sideways state in which the game card is rotated 90 degrees is called a rest state. In a predetermined area, a reverse position state in which the game card is rotated 180 degrees is called an active state. Note that game card in a predetermined direction may be determined as an active state in advance, and a state when the direction of the game card is changed from the predetermined direction may be determined as a rest state. During a game, these states of the game card may be used as appropriate.

### Leader Card 21

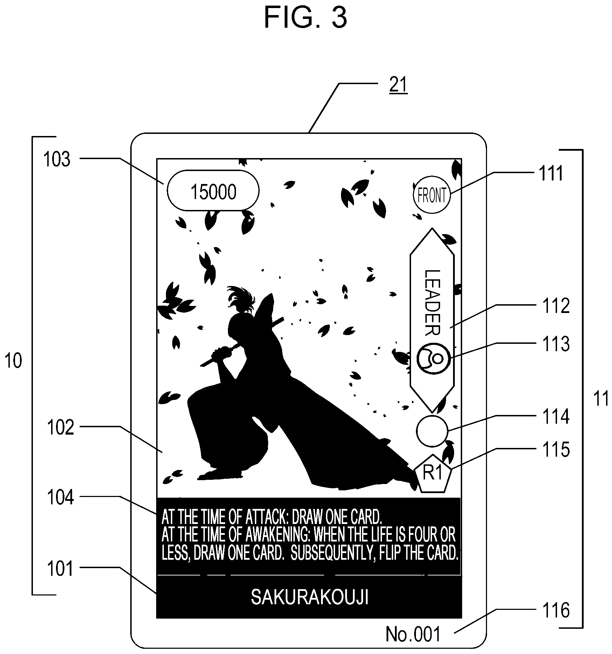

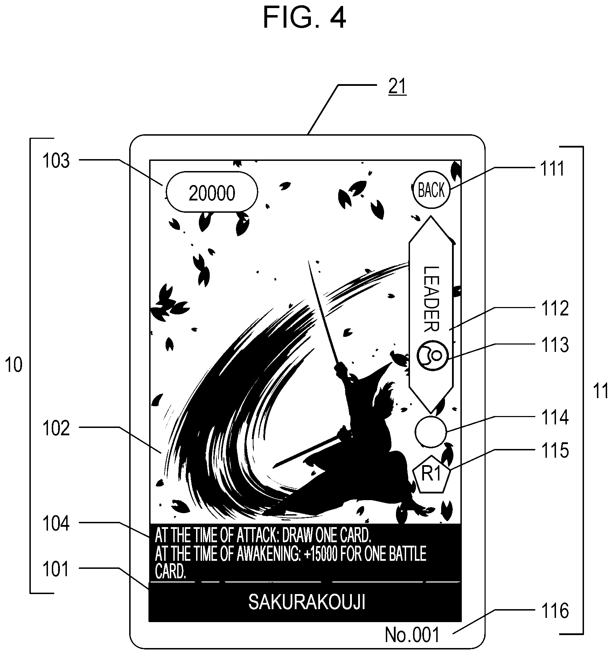

The leader card 21 (the first type first game element) will be described. Figs. 3 and 4 are views illustrating an example of the leader card 21. Fig. 3 is a view for explaining an example of the front surface of the leader card 21. Fig. 4 is a view for explaining an example of the back surface of the leader card 21. One leader card 21 is included in each deck. The leader card 21 battles against the leader card 21 or the battle card 22 of the opponent player.

Character information 10 and card information 11 are respectively written on the front surface and the back surface of the leader card 21. When a game starts, the leader card 21 is placed so that the front surface is seen; however, when a predetermined condition is satisfied, the leader card 21 is placed so that the back surface is seen.

The leader card 21 includes the character information 10 and the card information 11, and the character information 10 includes a character name 101, a character image 102, capability information 103, and effect information 104.

The character name 101 is the name of a character associated with the card. In the example illustrated in Figs. 3 and 4, "Sakurakouji" is written.

The character image 102 is the image of a character associated with the card.

The capability information 103 is a parameter for the ability of a character associated with the game card. In the present embodiment, a description will be given using a case where the power value of a character is written as the capability information. Victory is achieved when the power value is greater than the power value of the battle card 22 of the opponent player. In the example of Fig. 3, the power value "15000" is written, and in the example of Fig. 4, the power value "20000" is written.

The effect information 104 describes skill information related to the effect exercised at the time of attack and awakening information related to the condition and effect for turning the card front to back. In the example of Fig. 3, "At the time of attack: draw one card." is written as the skill information, and "When the life is four or less, draw one card. Subsequently, flip the card." is written as the awakening information.

Note that the capability information 103 and the effect information 104 may be included in the character information 10; however, a description will be given using an example in which the capability information 103 and the effect information 104 are not included in the character information.

The card information 11 includes front/back information 111, a card type name 112, a card type mark 113, color information 114, a rarity level 115, and card identification information 116.

The front/back information 111 is information that clearly specifies the front or back of the leader card 21, and may be any of a character string, illustration, or a symbol mark as long as the information identifies the front or back. In the example illustrated in Fig. 3, the character "front" indicates the front surface as the front/back information, and in the example illustrated in Fig. 4, the character string "back" indicates the back surface as the front/back information. Note that the front/back information may be provided at least on the back surface. This is because for the game cards of a card game, the appearance of each card itself is regarded as important, thus extra information should not be written on the front surface.

The card type name 112 is information indicating the type of a card. The card type name 112 is recorded with information on one of the leader card, the battle card, and the extra card, and in the example of the leader card 21 illustrated Figs. 3 and 4, the card type name 112 is recorded with "leader".

The card type symbol 113 is recorded with one of the symbols that distinguish between the leader card 21, the battle card 22, and the extra card 23. The leader card 21 is recorded with a leader symbol indicating the leader card. The leader symbol (the first symbol) may be a symbol that can recall the role of the leader card 21 so as to visually identify the leader card.

The color information 114 indicates information on the color of the card. A player refers to the color information 114 of the leader card 21, and constructs a deck using the battle cards 22 and the extra cards 23 with the same color information.

The rarity level 115 indicates the rarity level of the game card. Any display method may be adopted as long as the rarity level is set in advance. In the present embodiment, a description will be given using a case where the rarity is divided into five scales. The example illustrated in Figs. 3 and 4 exemplifies a case where the rarity level is one.

The card identification information 116 is recorded with identification information that uniquely identifies the game card. In the example of Figs. 3 and 4, "001" is written as the card identification information 116.

The leader card 21 is different from the other game cards, and the card type symbol 113 (the leader symbol), and the capability information 103 or the effect information 104 are written on the front and back of the card. The capability information 103 or the effect information 104 are different between the front and the back. Thus, evolution or awakening of one character can be expressed by one card, and it is possible to identify the leader card by the display on the front and back.

### Battle Card 22

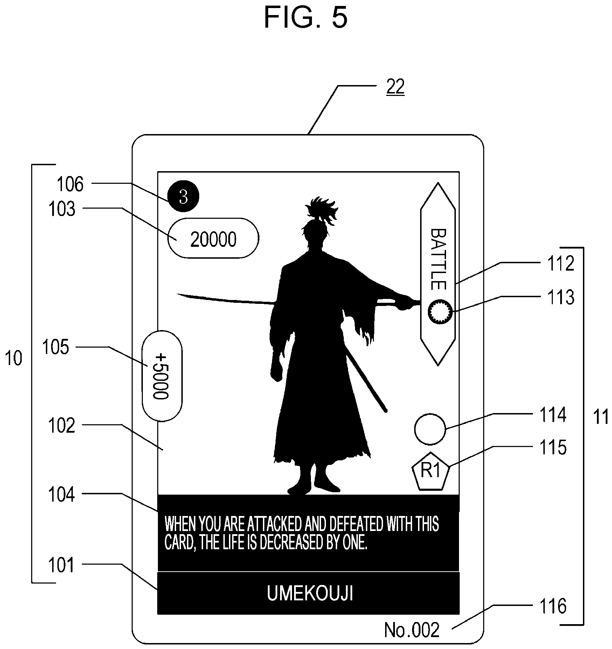

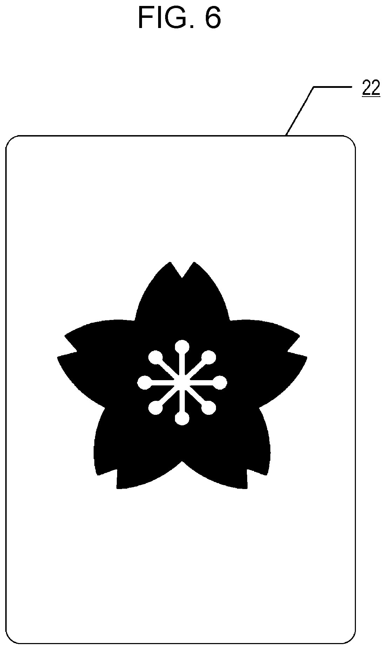

The battle card 22 (the first type second game element) will be described. Fig. 5 is a view for explaining an example of the front surface of the battle card 22. Fig. 6 is a view for explaining an example of the back surface of the battle card 22. As illustrated in Fig. 5, in the battle card 22, the image of an associated character is shown only on the front surface. All the back surfaces of the battle cards 22 are the same. The battle card 22 is a card for attacking the leader card 21 or the battle card 22 of an opponent player.

The battle card 22 includes the character information 10 and the card information 11.

As in the leader card 21, the character information 10 includes the character name 101, the character image 102, the capability information 103, and the effect information 104. In addition, the character information 10 includes combo information 105 and cost information 106.

As in the leader card 21, the character name 101 is the name of a character associated with the card. In the example illustrated in Fig. 5, "Umekouji" is written.

As in the leader card 21, the character image 102 is the image of a character associated with the card.

As in the leader card 21, the capability information 103 is a parameter for the ability of a character associated with the card. In the example of Fig. 5, the power value "20000" is written.

The effect information 104 is recorded with skill information related to the effect exercised at the time of attack. In the example of Fig. 5, as the skill information, "When you are attacked and defeated with this card, the life is decreased by one" is written.

The combo information 105 is information related to power value for increasing the power value of other game cards positioned in the battle area. In the example illustrated in Fig. 5, "+5000" is written as the combo information 105.

The cost information 106 is information on the cost necessary for placing the battle card 22 from the hand of cards to the battle area. For example, the battle card 22 can be placed on the battle area by changing game cards positioned in an energy area, for example, from the active state to the rest state for the number of cards equivalent to the numerical value written in the cost information 106. In the example of Fig. 5, "3" is written as the cost information 106. Note that in the following, changing game cards positioned in an energy area from the active state to the rest state will be described as "paying the cost".

The card information 11 includes the card type name 112, the card type mark 113, the color information 114, the rarity level 115, and the card identification information 116.

The card type name 112 is information indicating the type of a card. In the example of the battle card 22 illustrated in Fig. 5, the card type name 112 is recorded with "Battle".

The card type symbol 113 is recorded with a battle symbol (a second symbol) that indicates the battle card 22. The battle symbol may be a symbol that can recall the role of the battle card 22 so as to visually identify the battle card.

The color information 114 indicates information on the color of the card. A player refers to the color information 114 of the leader card 21, and constructs a deck using the battle cards 22 and the extra cards 23 with the same color information.

The rarity level 115 indicates the rarity level of the game card. The example illustrated in Fig. 5 exemplifies a case where the rarity level is one.

The card identification information 116 is recorded with identification information that uniquely identifies the game card. In the example of Fig. 5, "002" is written as the card identification information 116.

### Extra Card 23

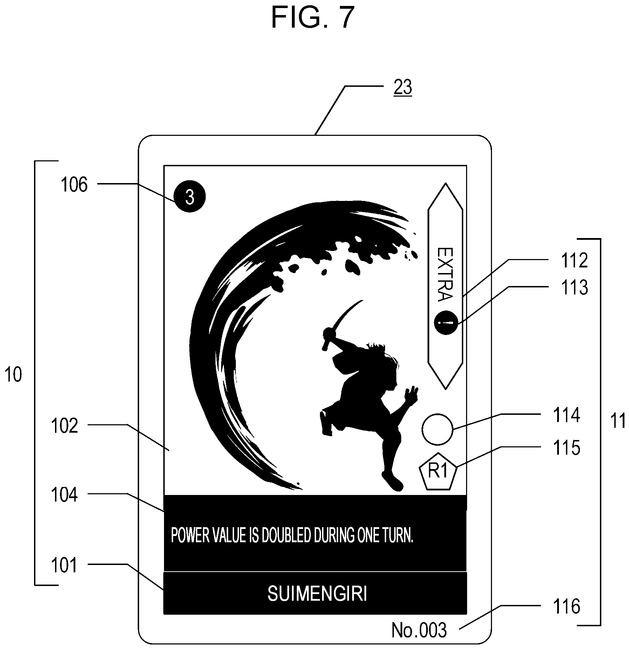

The extra card 23 (the first type third game element) will be described. Fig. 7 is a view for explaining an example of the front surface of the extra card 23. As illustrated in Fig. 7, the image of an associated character is shown on the front surface of the extra card 23. The back surface of the extra card 23 is the same as that of the battle card 22. Therefore, the back surface of the extra card 23 is the same as that of the battle card 22 illustrated in Fig. 6.

The extra card 23 includes the character information 10 and the card information 11.

The character information 10 includes the character name 101, the character image 102, the effect information 104, and the cost information 106.

The character name 101 is the name of a character associated with the card. In the case of the extra card 23, the character name 101 is the name of a characteristic scene, a visual scene, a landscape, a background, a building, possession of the character, and an event that appear in a work. In the example of Fig. 7, "Suimengiri" is written.

The character image 102 is the image of a character associated with the card, and in the image, a characteristic scene, a visual scene, a landscape, a background, a building, possession of the character, or an event that appear in a work is expressed along with the character.

The effect information 104 is recorded with skill information related to the effect exercised at the time of attack. In the example of Fig. 7, as the skill information, "The power value is doubled during one turn" is written.

The cost information 106 is information on the cost necessary for placing the extra card 23 from the hand of cards to the battle area. In the example of Fig. 7, "3" is written as the cost information 106.

The card information 11 includes the card type name 112, the card type mark 113, the color information 114, the rarity level 115, and the card identification information 116.

The card type name 112 is information indicating the type of a card. In the example of the extra card 23 illustrated in Fig. 7, the card type name 112 is recorded with "Extra".

The card type symbol 113 is recorded with an extra symbol (a third symbol) that indicates the extra card 23. The extra symbol may be a symbol that can recall the role of the extra card 23 so as to visually identify the extra card.

The color information 114 indicates information on the color of the card. A player refers to the color information 114 of the leader card 21, and constructs a deck using the battle cards 22 and the extra cards 23 with the same color information.

The rarity level 115 indicates the rarity level of the game card. The example illustrated in Fig. 7 exemplifies a case where the rarity level is one.

The card identification information 116 is recorded with identification information that uniquely identifies the game card. In the example of Fig. 7, "003" is written as the card identification information 116.

### Second Type Game Element

The second type game element will be described.

The second type game element in the present embodiment is a game element used for trading in a game, and is called an in-game currency. The second type game element includes a paid-for second type game element (second type first game element) which can be obtained by a player paying a price (e.g., money), and a free of charge second type game element (second type second game element) which is granted from a game-administration side by achieving a predetermined condition (e.g., a mission prepared by a game-administration side) without exchanging with a price (e.g., money) by a player. The paid-for second type game element (the second type first game element), and the free of charge second type game element (the second type second game element) are primarily used for exchange (purchase) with the above-mentioned first type game element (game card). In the following description, the paid-for second type game element (the second type first game element) is described as the paid-for currency, and the free of charge second type game element (the second type second game element) is described as the free of charge currency.

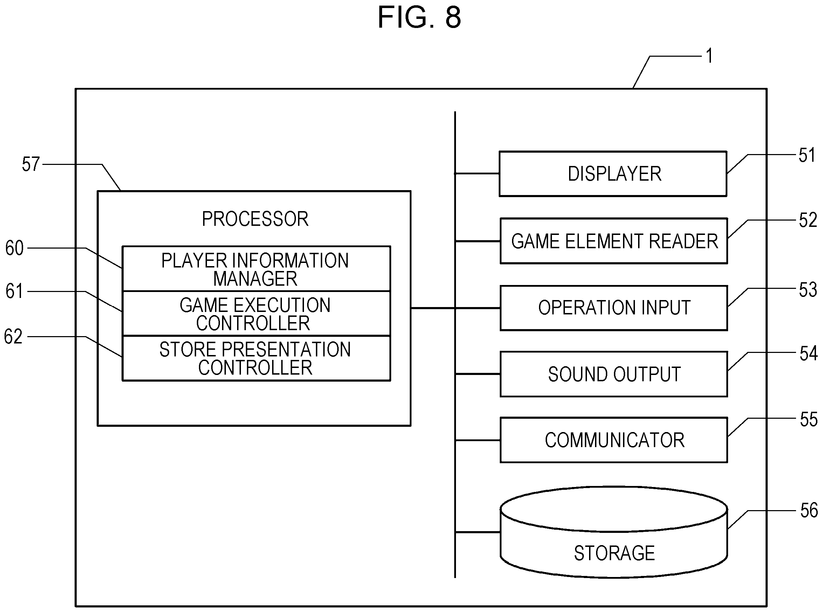

Next, the configuration of each device will be described. Configuration of Player Terminal 1
Fig. 8 is a block diagram illustrating a functional configuration example of the player terminal 1.

As illustrated in Fig. 8, the terminal 1 includes a displayer 51, a game element reader 52, an operation input 53, a sound output 54, a communicator 55, a storage 56, and a processor 57.

The displayer 51 displays various game screens based on an input image signal. The function of the displayer 51 can be implemented by a display device such as a flat panel display like a liquid crystal, a cathode-ray tube (CRT), a projector, or a head mounted display. In the example of a personal computer of Fig. 2, the displayer 51 corresponds to the display 11.

The game element reader 52 is a reader that reads character information from a game card which is a real article, the character information appearing in a game. The game element reader 52 can read identification information and the like of a game card possessed by a player by setting (arranging) the character that appears in a fighting game to the game element reader 52 using the game card.

The operation input 53 is for a player to input various operations related to a game, and an operation input signal according to an operation input is output to the processor 57. The function of the operation input 53 can be implemented not only by a device directly operated by a player's fingers, such as a keyboard, a mouse, a touch operation pad, a home button, a button switch, a joystick, or a track ball, but also by a device that detects motion and posture, such as an acceleration sensor, an angular velocity sensor, an inclination sensor, or a geomagnetic sensor. In the example of the personal computer in Fig. 2, the operation input 53 corresponds to a keyboard 12.

The sound output 54 is for outputting sound effects related to a game based on an input sound signal.

The communicator 55 implements communication by connecting to the communication line N. The function of the communicator 55 can be implemented by e.g., a wireless communication device, a modem, a terminal adaptor (TA), the jack of a wired communication cable, or a control circuit.

The storage 56 pre-stores a program, and data or the like used during execution of the program, or temporarily stores the data for each process, the program causing the player terminal 1 to operate, and implementing various functions of the player terminal 1. The storage 56 can be implemented by e.g., a solid state drive using an IC memory such as a RAM, a ROM, or a flash memory, a magnetic disk such as a hard disk, or an optical disk such as a CD-ROM and a DVD.

The storage 56 stores a system program and a game program. The system program implements the basic functions of the player terminal 1 as a computer. The game program causes the processor 57 to exert the later-described functions. When a player completes account registration, the program is distributed from the game server 2 or another application distribution server. The storage 56 also stores a database necessary to execute a game. In the present embodiment, the storage 56 stores a player information database D1, and a game element information database D2.

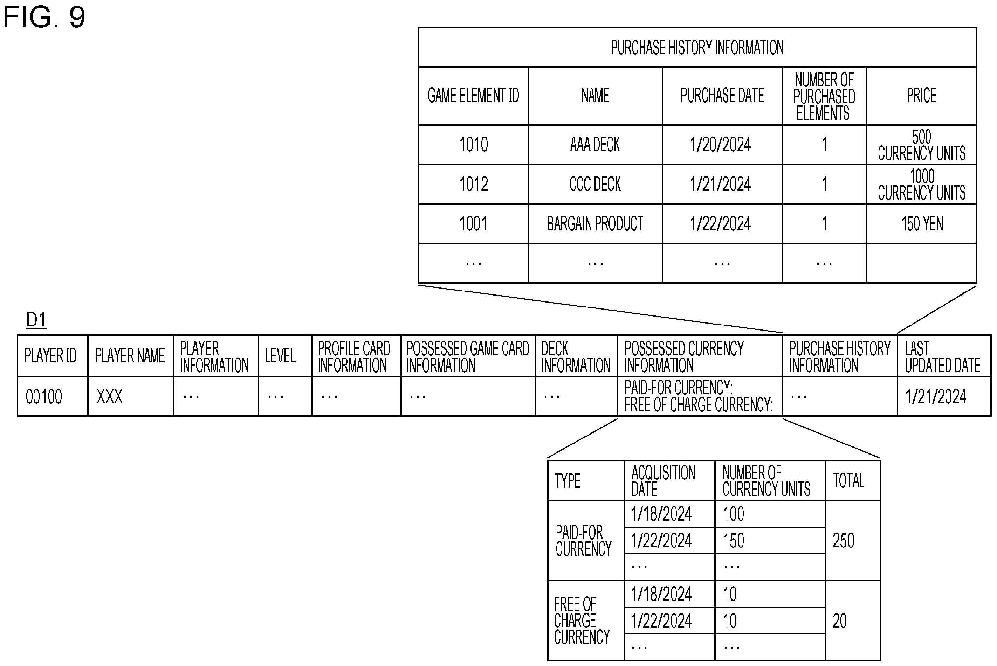

The player information database D1 is a database that stores various types of information on players. Fig. 9 is a table illustrating an example of the player information database D1. The player information database D1 includes a field for player ID, a field for player name, a field for player information, a field for level, a field for profile card information, a field for possessed game card information, a field for deck information, a field for possessed currency information, a field for purchase history information, and a field for last updated date. These pieces of information are associated with each other, and stored.

The field for player ID is for recording identification information to identify a player. The field for player name is for recording e.g., a nickname. The field for player information is for recording experience points or the like obtained through play of a fighting game. The field for level is for recording the level of a player achieved by accumulation of experience points. The field for profile card information is for recording information on the later-described profile card. The field for possessed game card information is for recording the game card identification information (game card ID) of a game card possessed by a player. The field for deck information is for recording information on a deck constructed from game cards by a player, that is, for recording the game card IDs of the game cards included in the deck.

The field for possessed currency information is for recording information on the in-game currency possessed by a player, specifically, the amount of each of paid-for currency and free of charge currency. Specifically, for each of paid-for and free of charge types, the date of acquisition of the currency, the acquired currency units, and the total amount are written. The field for purchase history information is for recording the history of purchase of the game cards, and in-game currency purchased by a player. Specifically, the game element ID of a purchased game element, the name of the game element, the purchase date, and the number of purchased game elements are written. The field for last updated date is for recording the last updated date of the player information database D1.

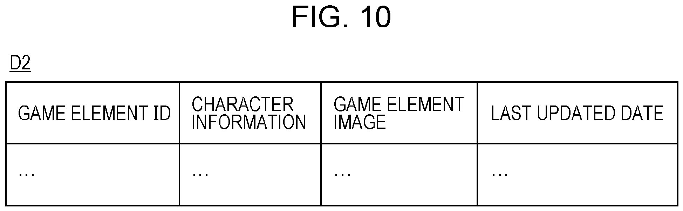

The game element information database D2 is a database to store information on the game element that appears or is used in a game. Fig. 10 is a table illustrating an example of the game element information database D2. The game element information database D2 includes a field for game element ID, a field for character information, a field for game element image, and a field for last updated date. These pieces of information are associated with each other, and stored. The field for game element ID is for recording identification information (game card ID) to identify the game element such as a game card. The field for character information is for recording the character information (for example, the profile information, and the ability value) of a character which has transformed into a game element. The field for game element image is for recording the image data of a game element itself (e.g., a game card) or the image data of a character which has transformed into a game element. Note that the image data includes a still image and a video. The field for last updated date is for recording the last updated date of the game element information database D2.

Note that these databases can be successively downloaded via the game server 2 for addition to or change in the characters used in a game.

The processor 57 comprehensively controls the operation of the terminal 1 based on the programs and data stored in the storage 56, and various input signals from the operation input 53. The function of the processor 57 can be implemented by e.g., a microprocessor such as a CPU or a GPU, and electronic parts such as an ASIC, and an IC memory. As primary functional units, the processor 57 includes a player information manager 60, a game execution controller 61, and a store presentation controller 62.

The player information manager 60 manages the information on players using the player information database D1. The player information manager 60 uses the player information database D1 to manage game elements such as player information like a player ID and a player name, possessed game cards, in-game currency, and decks formed by a player. When those pieces of information are updated, the player information manager 60 updates the player information database D1, and records the update date.

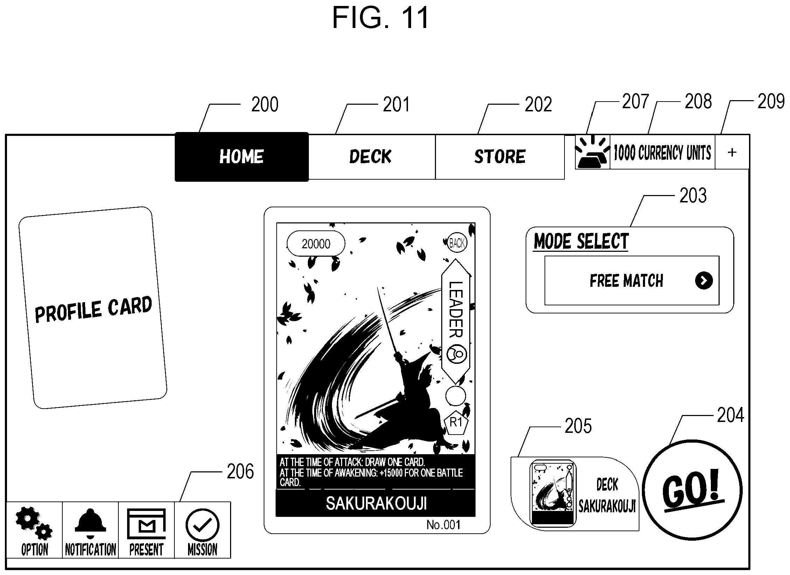

The game execution controller 61 controls and managed the progress of the entire game. For example, the game execution controller 61 displays a menu screen of a home screen or the like, and performs a process selected by a player. Fig. 11 is a view illustrating an example of a home screen. The home screen in Fig. 11 displays a home screen tab 200 for the home screen, a deck tab 201 to make a transition to a deck screen for forming a deck, a store tab 202 to make a transition to a store screen for purchasing a game card, a fighting mode selection button 203 to select to fighting mode for a fight using a deck, a fighting button 204 to make a transition to a fight in the selected fighting mode, an icon 205, a reward button 206 to make a transition to a reward screen related to reward of a mission, an in-game currency icon 207, an in-game currency balance (amount of possession) icon 208, and an in-game currency providing screen transition button 209 to make a transition to a purchase screen for in-game currency. Note that the in-game currency balance (amount of possession) icon 208 shows the total of paid-for currency units and free of charge currency units. On the icon 205, the deck name of a deck currently selected, and the leader card included in the deck are displayed.

The game execution controller 61 executes a fighting game between players, and when victory or defeat of the game is determined, the player information, the level and the like of the player information database D1 are updated with a fighting result, and the experience points, level, rank which have been changed by the fighting. The date of update is recorded on the field for last updated date as the last updated date.

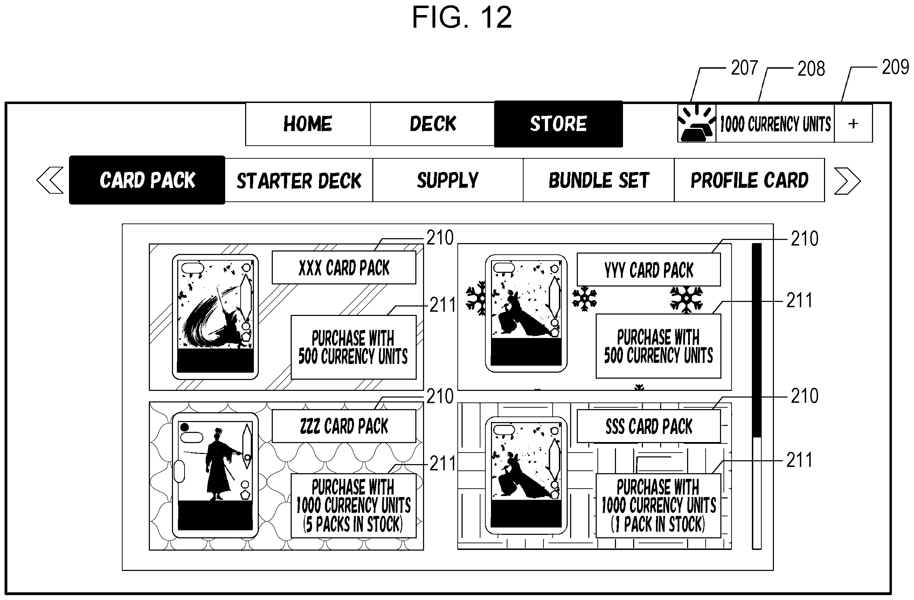

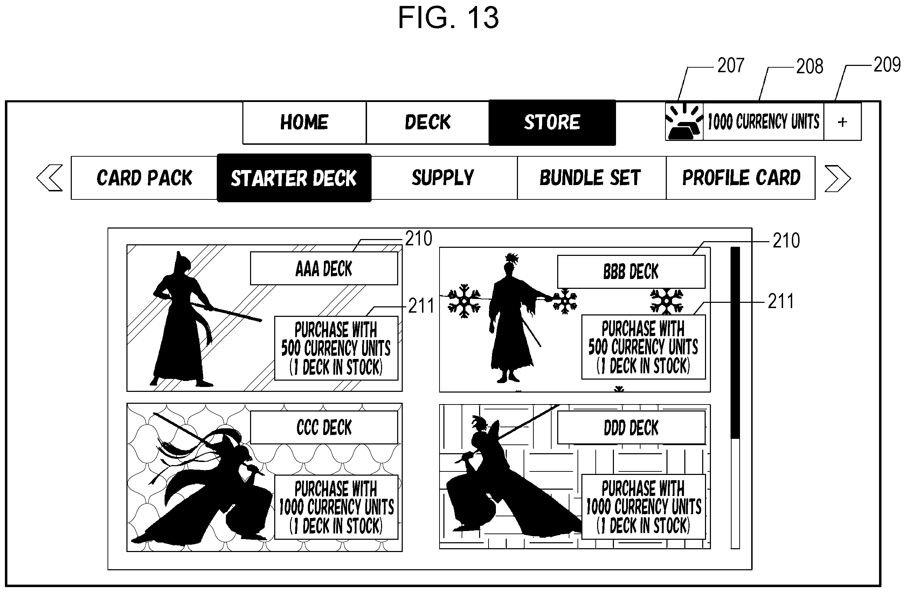

When the store tab 202 for the home screen is selected, the store presentation controller 62 presents a store screen for trading the game elements (such as a game card, in-game currency) to selectably present the game elements to be traded on the store screen. Figs. 12 and 13 are views illustrating an example of a store screen. Fig. 12 is an example of a store screen for purchasing a card pack (set of game cards), Fig. 13 is an example of a store screen for purchasing a starter deck (set of game cards), and providable (grantable) card packs are selectably presented. In the area of card packs, a name 210 of each card pack, and an option 211 for purchasing the card pack are displayed. Here, the provision (grant) includes obtaining by exchanging with a price by a player, and providing (granting) by an administration side without needing to pay for price.

The providable game elements include the ones provided with restrictions, and the ones provided without restrictions. The game elements with restrictions include, for example, the ones with restrictions on the number of times of provision (grant), and the ones which are providable (grantable) only in a predetermined time period. The restrictions on the number of times of provision (grant) of game element is, for example, restrictions on the number of times of provision for one player, or restrictions on the providable number of times of provision for all players. Also, game elements without restrictions on the provision (grant), and game elements with restrictions on the provision (grant) may be displayed collectively or singly. In the example of Fig. 12, "XXX card pack" and "YYY card pack" have no restrictions on the number of times of provision, but "ZZZ card pack" and "SSS card pack" have restrictions on the number of times of provision. In the example of Fig. 13, all of "AAA deck" "BBB deck" "CCC deck" and "DDD deck" have restrictions on the number of times of provision. In this manner, in addition to the game elements that are sold normally, the game elements that are provided (granted) only in a specific number or in a specific time period are supplied, thus the interest of each player to the game elements can be maintained continually.

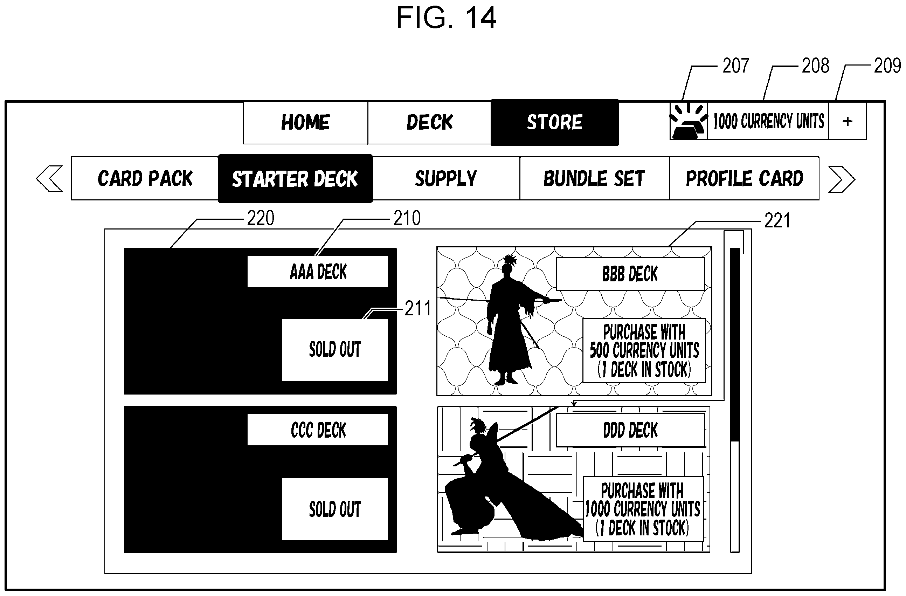

In addition, the game elements presented on the store screen include not only currently tradable game elements, but also game elements which were providable in the past, but are currently untradable. The currently untradable game elements are, for example, the game elements when restrictions on the number of times of grant of game element are provided per player and the restricted limit is reached, or when the number of times of provision for all players is predetermined and the number of times of provision (grant) has reached the number (sold-out state). The store presentation controller 62 presents currently unprovidable game elements to a player to be distinguishable from currently providable game elements, so that the currently unprovidable game elements cannot be selected. Fig. 14 is a view illustrating an example of display of currently providable game elements and currently unprovidable game elements on the store screen. In the example of Fig. 14, an area 220 for "AAA deck" and "CCC deck" in a sold-out state is expressed in black to be distinguishable from an area 221 for "BBB deck" and "DDD deck" in a providable state, and display of an option 211 for "AAA deck" and "CCC deck" is changed to "SOLD OUT" indicating a sold-out state, and presented as unselectable by a player. In this manner, currently untradable game elements are presented as unselectable, thereby the player can recognize the game elements provided in the past and do not select from the currently untradable game elements, thus the convenience of players is improved.

The store presentation controller 62 also provides or grants in-game currency. As illustrated in Figs. 11 to 14, instead of using transition to the in-game currency providing screen by a tab, the in-game currency icon 207, the in-game currency balance icon 208 for the in-game currency of a player, and the in-game currency providing screen transition button 209 to make a transition to the in-game currency providing screen are displayed on each of the home screen caused by the home screen tab 200, the deck formation screen caused by the deck tab 201, and the store screen caused by the store tab 202.

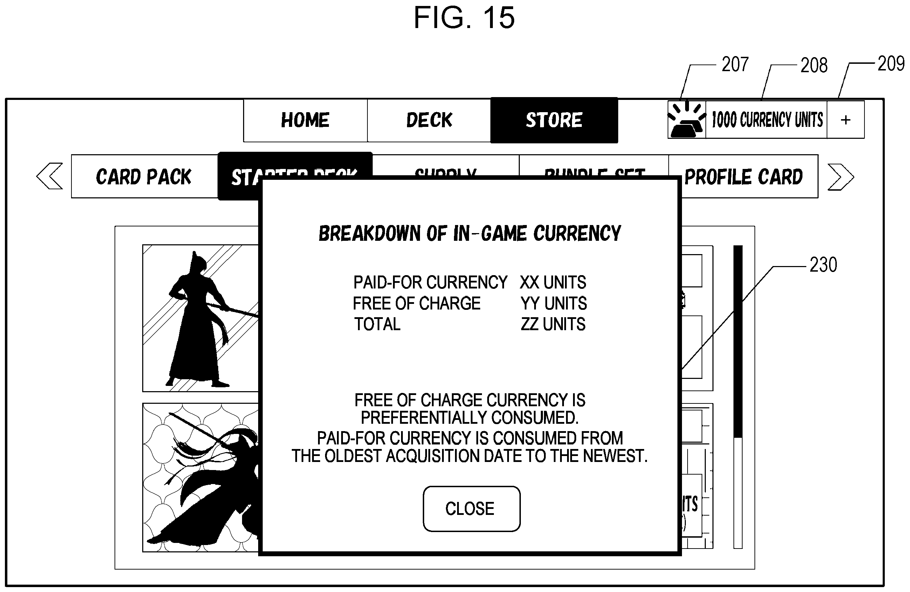

When one of the in-game currency icon 207 and the in-game currency balance icon 208 for the in-game currency of player is selected, the store presentation controller 62 refers to the field for possessed currency information of the player information database D1, and displays the breakdown between the paid-for and free of charge in-game currency units currently possessed by the player. Fig. 15 is a view illustrating an example of display of breakdown between paid-for and free of charge in-game currency units currently possessed. In the example of Fig. 15, the balance of paid-for currency among the in-game currency currently possessed by the player, and the balance of free of charge currency among the in-game currency currently possessed by the player are displayed. As the price for purchasing a game element, it is displayed that free of charge currency is consumed preferentially, and paid-for currency is consumed from the oldest date of acquisition to the newest date.

In this manner, the in-game currency icon 207, the in-game currency balance icon 208, and the in-game currency providing screen transition button 209 are presented on each screen, thus the player can recognize the balance of the in-game currency currently possessed, and the breakdown between paid-for and free of charge in-game currency, thus can make a transition from each screen to the in-game currency providing screen for obtaining necessary in-game currency.

When the in-game currency providing screen transition button 209 is selected, the store presentation controller 62 makes a transition to the in-game currency providing screen. On the in-game currency providing screen, the store presentation controller 62 presents the currently providable in-game currency.

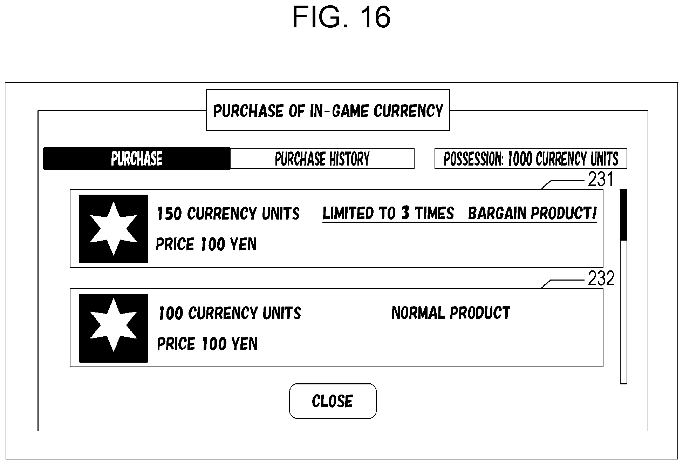

Fig. 16 is a view illustrating an example of the in-game currency providing screen. In the example of Fig. 16, a first paid-for currency pack 231 and a second paid-for currency pack 232 are presented on the in-game currency providing screen. The first paid-for currency pack 231 costs 150 currency units for 100 yen, and the second paid-for currency pack 232 costs 100 currency units for 100 yen. Like this, the first paid-for currency pack 231 and the second paid-for currency pack 232 have different provided amounts for a predetermined price. In other words, the first paid-for currency pack 231 offers a better deal. However, there is an upper limit to the number of times of provision (grant) of the first paid-for currency pack 231 for one player. In the example of Fig. 16, the upper limit to the number of times of provision (grant) of the first paid-for currency pack 231 is three for one player. In contrast, there is no upper limit to the number of times of provision (grant) of the second paid-for currency pack 232 for one player.

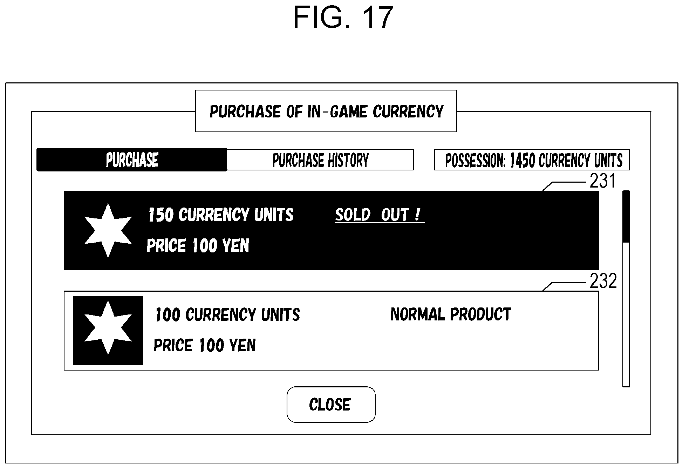

The store presentation controller 62 refers to the purchase history information of the player in the player information database D1, and when the upper limit of the number of times of provision (grant) of the first paid-for currency pack 231 is reached, notifies of a sold-out state due to this situation, and presents the first paid-for currency pack 231 as unselectable. Fig. 17 is a view illustrating an example of when the number of times of provision (grant) of the first paid-for currency pack 231 has reached an upper limit, resulting in a sold-out state.

As described above, in addition to the game elements that are sold normally, the game elements that are provided (granted) only in a specific number or in a specific time period are supplied, thus the interest of each player to the game elements can be maintained continually.

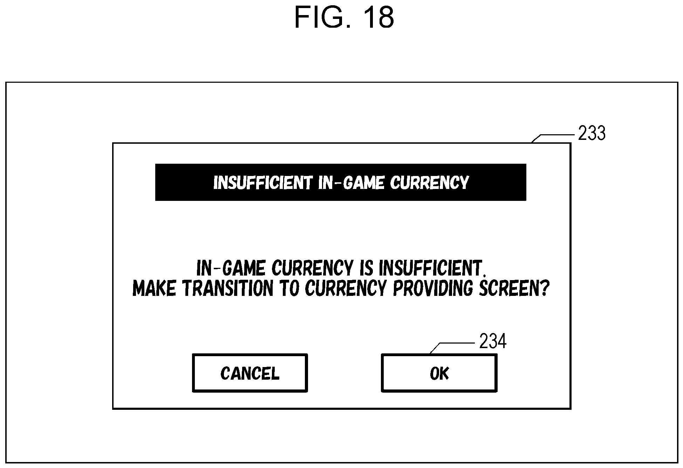

In addition, when a game element such as a game card is purchased on the store screen for purchasing game element, if the in-game currency (the total of the paid-for currency units and the free of charge currency units) for the price of the game element is insufficient, the store presentation controller 62 may notify of insufficiency of the in-game currency, and as a method to make a transition to the in-game currency providing screen, may display a screen from which a transition can be made to the in-game currency providing screen. Fig. 18 is a view illustrating an example of a screen to be displayed when the in-game currency for the price of a game element is insufficient. In the example of Fig. 18, a notification 233 indicating that the in-game currency for the price of a game element is insufficient, and a button 234 which can make a transition to the in-game currency providing screen are displayed.

### Configuration of Game Server 2

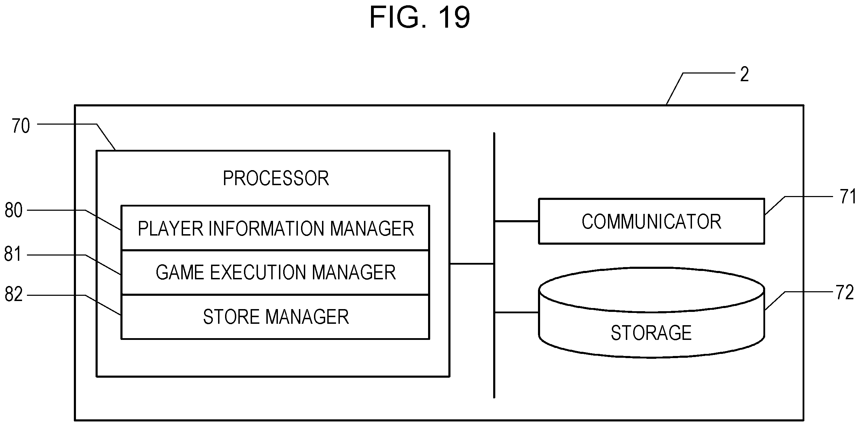

Fig. 19 is a block diagram illustrating a functional configuration example of the game server 2. The game server 2 includes a processor 70, a communicator 71, and a storage 72.

The processor 70 comprehensively controls the operation of the game server 2 based on the programs, data stored in the storage 72, and received information and the like. The function of the processor 70 can be implemented by e.g., a microprocessor such as a CPU or a GPU, and electronic parts such as an ASIC, an IC memory. The processor 70 has the functions of a player information manager 80, a game execution manager 81, and a store manager 82.

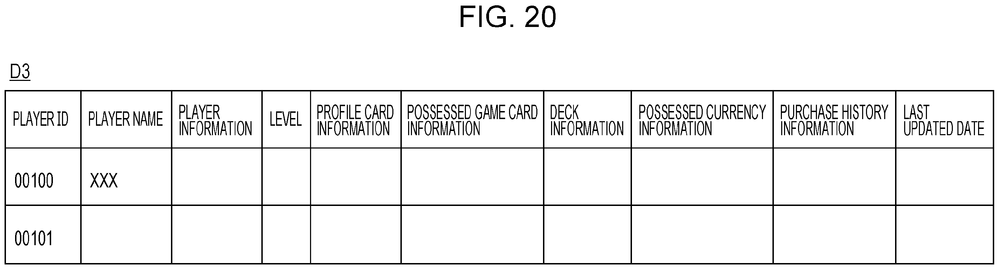

The player information manager 80 manages the information on players using the user information management database D3. Fig. 20 is a table illustrating an example of the user information management database D3. The user information management database D3 has one record for each player, and the record is similar to the user information database D1.

The player information manager 80 checks the player ID and the last updated date of the user information database D1 transmitted at the login to a game via the player terminal 1 with the player ID and the last updated date of the user information management database D3. When the last updated dates match, a notification of the match is transmitted, and when the last updated dates do not match, synchronization of the content of the user information database D1 is achieved between the player terminal 1 and the game server 2 by transmitting the information registered in the user information management database D3.

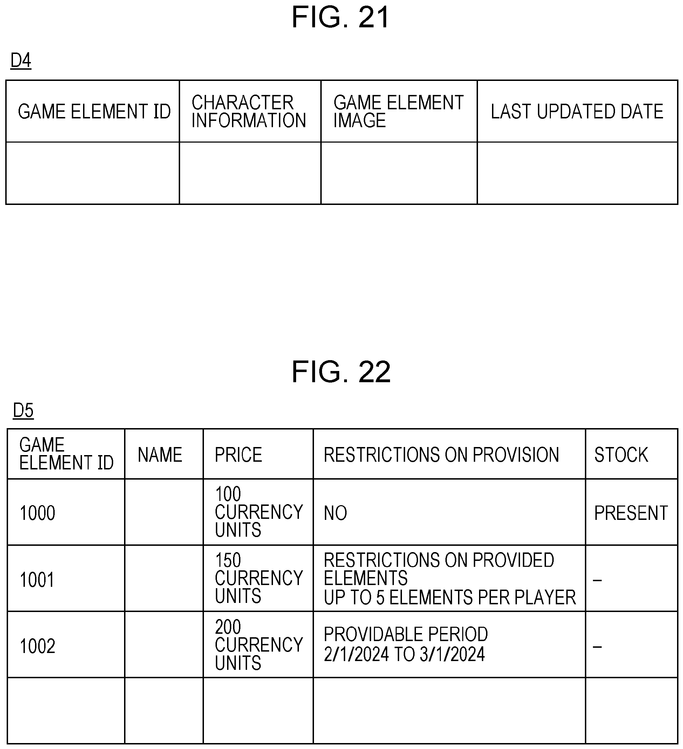

The game execution manager 81 grants and manages various parameters such as experience points based on matching between players, execution of a fighting game, and the result of the fighting game. The game execution manager 81 uses the game element management database D4 to manage various game elements such as the game cards used in games. Fig. 21 is a table illustrating an example of the game element management database D4. The game element management database D4 has information similar to the game element database D4 stored in each player terminal 1. The game execution manager 81 updates the game element database D4 due to appearance of a new game element. At the time of login via the player terminal 1, synchronization of the content of the game element database D2 is achieved between the player terminal 1 and the game server 2.

The store manager 82 manages a store that provides game elements using the store management database D5. Fig. 22 is a table illustrating an example of the store management database D5. In the example of Fig. 22, one record includes a field for game element ID to identify the game element to be provided, a field for the game element, a field for price (in-game currency) of the game element, a field for restrictions on the provision of the game element, and a field for stock of the game element.

In the field for game element ID, not only the game element ID of a game card or in-game currency itself is written, but also a game card pack (also including a deck) which is a set of multiple game cards, and identification information for an in-game currency pack which is a set of in-game currencies are written. Note that for a game card pack, the content of included game cards may be different even with the same identification information. In such a situation, a list of the game card IDs of the game cards (game cards which may be included in the game card pack) associated with the identification information for the game card pack is stored. At the time of provision to a player, the store manager 82 selects as many game card IDs as the number of cards in the game card pack from the list by drawing lots, and a set of the game cards with the selected game card IDs is provided as a game card pack. In the field for restrictions on provision, the content of restrictions on provision of the game element is written. As the restrictions on provision, for example, the number of times of provision (grant) of a game element, and a providable period are written. In the field for stock, when the number of times of provision are not restricted, "present" is written, and when the number of times of provision for all players are restricted, "the number of stocks" is written.

The store manager 82 receives a request from the player terminal 1, reads, from the store management database D5, the information on the game element to be provided, and transmits the information as store information.

The communicator 71 connects to the communication line N to establish communication.

The storage 72 stores a system program and a game program. The system program implements the basic functions of the game server 2 as a computer. The game program causes the processor 70 to function as the player information manager 80, the game execution manager 81, and the store manager 82.

In addition, a recorder 72 stores the user information management database D3, the game element management database D4, and the store management database D5.

### Operation of Each Device

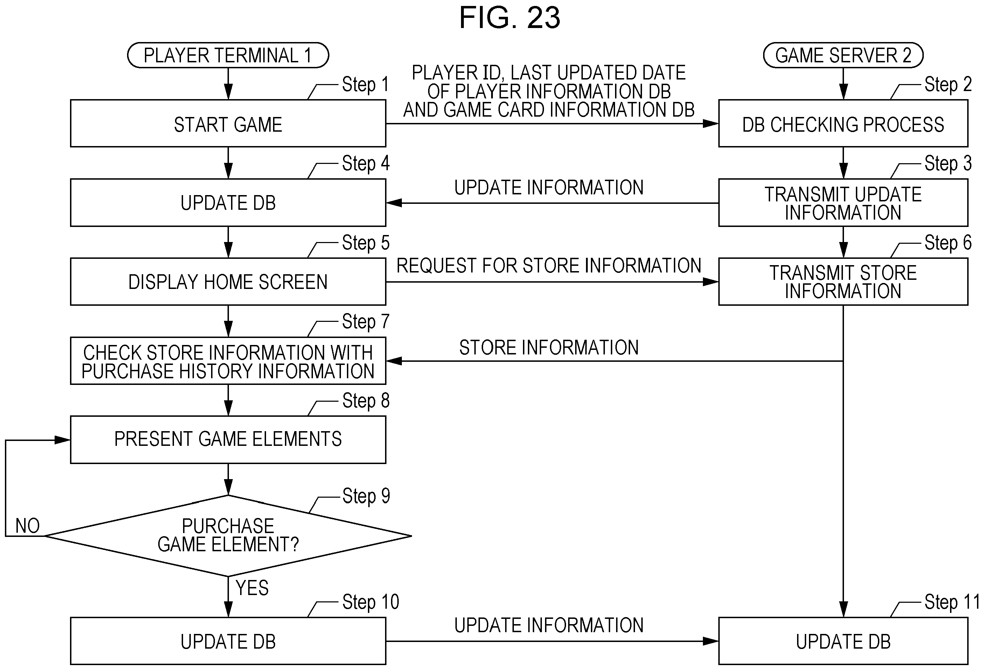

The operation of the player terminal 1 and the game server 2 will be described. Fig. 23 is a sequence diagram for explaining the operation of the player terminal 1 and the game server 2. In the following, a description will be given assuming that a player has completed the initial setting for the game, and a player ID has been granted to the player.

When a player starts a game application of the player terminal 1, the game execution controller 61 transmits the player ID of the player, and the last updated date of the player information database D1 and the game element database D2 to the game server 2 (Step 1).

The player information manager 80 of the game server 2 checks the last updated date of the received player ID with the last updated date of the player ID of the player information management database D3 (Step 2). When the last updated dates match, the player information manager 80 transmits a notification of the match. In contrast, when the last updated dates do not match, the player information manager 80 transmits each information stored in the record of the player ID of the player information management database D3 (Step 3). Thus, player information is synchronized between the player terminal 1 and the game server 2. Similarly, the player information manager 80 checks the last updated date of the game element database D2 with the last updated date of the game element management database D4, and when the last updated dates do not match, transmits each information of the game element management database D4. Thus, game element information is synchronized between the player terminal 1 and the game server 2. Note that the information transmitted from the game server 2 may be information on the difference between the player terminal 1 and the game server 2.

The player information manager 60 and the game execution controller 61 of the player terminal 1 receive notification of database from the game server 2, and update the player information database D1 and the game element information database D2 as necessary (Step 4).

The store presentation controller 62 of the player terminal 1 displays the home screen illustrated in Fig. 11, and requests the game server 2 for store information (Step 5).

The store manager 82 of the game server 2 receives the request from the player terminal 1, reads, from the store management database D5, each information of the game element to be provided, and transmits the information as the store information (Step 6).

The store presentation controller 62 of the player terminal 1 receives the store information. For a game element with restrictions on provision among the game elements of the store information, the store presentation controller 62 checks the restrictions on provision with the purchase history information of the player information database D1, and determines whether the game element is providable (grantable) or unprovidable (ungrantable) (Step 7). When the store tab 202 is selected, the store presentation controller 62 presents providable (grantable) game elements, and unprovidable (ungrantable) game elements in a distinguishable format, presents providable (grantable) game elements as selectable, and presents unprovidable (ungrantable) game elements as unselectable (Step 8).

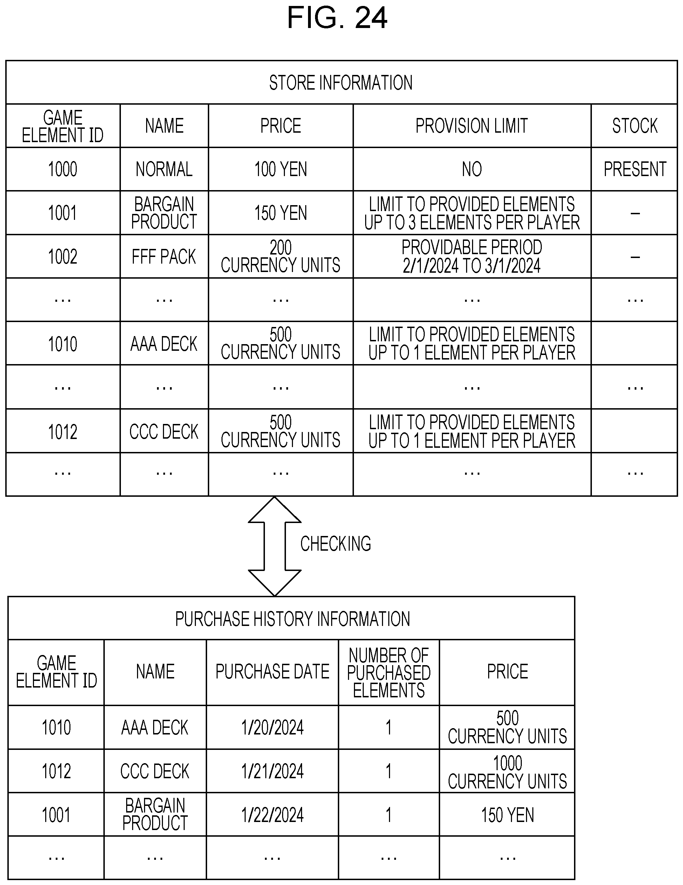

Fig. 24 shows tables for explaining determination as to whether each game element is providable (grantable) or unprovidable (ungrantable). Fig. 24 illustrates the received store information, and the purchase history information of the player information database D1. The store presentation controller 62 determines whether a game element ID with restrictions on provision in the received store information has been registered in the purchase history information. In the example of Fig. 24, "bargain product" with a game element ID "1001", "FFF pack" with a game element ID "1002", ..., "AAA deck" with a game element ID "1010", ..., and "CCC deck" with a game element ID "1012" have restrictions on provision. In contrast, in the purchase history information, "AAA deck" with a game element ID "1010", "CCC deck" with a game element ID "1012", and "bargain product" with a game element ID "1001" have one-time purchase history.

On the screen for the starter deck on the store screen, as illustrated in Fig. 14, the store presentation controller 62 presents the area 220 for "AAA deck" and "CCC deck" in a sold-out state expressed in black, which is distinguishable from the area 221 for "BBB deck" and "DDD deck" in a providable state, and changes the display of the option 211 for "AAA deck" and "CCC deck" to "SOLD OUT" indicating a sold-out state, thereby presenting the option 211 as unselectable by the player.

The "bargain product" with a game element ID "1001" has been purchased once, and the upper limit of restricted number of times of purchase has not been reached. Therefore, when the in-game currency providing screen transition button 209 to make a transition to the in-game currency providing screen is selected on any screen, as illustrated in Fig. 16, the store presentation controller 62 presents the paid-for currency pack 231 as the "bargain product" and the paid-for currency pack 232 on the in-game currency providing screen.

The store presentation controller 62 grants a game element to the player through selection of the game element, and exchange the game element with a price or in-game currency by the player (Step 9). In this trading, the store presentation controller 62 refers to the possessed currency information of the player information database D1, and consumes the possessed currency in the following order.
1. The free of charge currency is consumed in ascending order of the date of acquisition.
2. After the free of charge currency units reaches zero, the paid-for currency is consumed in ascending order of the date of acquisition.

The store presentation controller 62 then updates the possessed game card information, the possessed currency information, or the purchase history information of the player information database D1, and transmits the updated information of the player information database D1 to the game server 2 (Step 10).

The player information manager 80 of the game server 2 receives the updated information of the player information database D1, and updates the player information on the player (Step 11). The above operation is repeated for each selection, and purchase by the player.

In the embodiment of the present invention, in addition to the game elements that are sold normally, the game elements that are provided (granted) only in a specific number or in a specific time period are supplied, thus the interest of each player to the game elements can be maintained continually.

In the embodiment of the present invention, currently untradable game elements are presented as unselectable so that the player can recognize the game elements provided in the past, and the interest of the player to the game elements can be maintained continually. In addition, the player cannot select from the unprovidable game elements presented, thus such a game element cannot be selected by mistake, and the convenience of the player is improved.

In the present embodiment, each screen is provided with means (for example, an icon, a button) for making a transition to the in-game currency providing screen, thus it is possible to make a transition from each screen to the in-game currency providing screen to obtain in-game currency as necessary, and the convenience of the player is improved.

In the present embodiment, each screen is provided with means (for example, an icon, a button) for showing the breakdown of the in-game currency, thus the player can recognize the balance of possessed in-game currency, and the breakdown between paid-for and free of charge in-game currency as necessary, and the convenience of the player is improved.

### Modification 1 of Embodiment

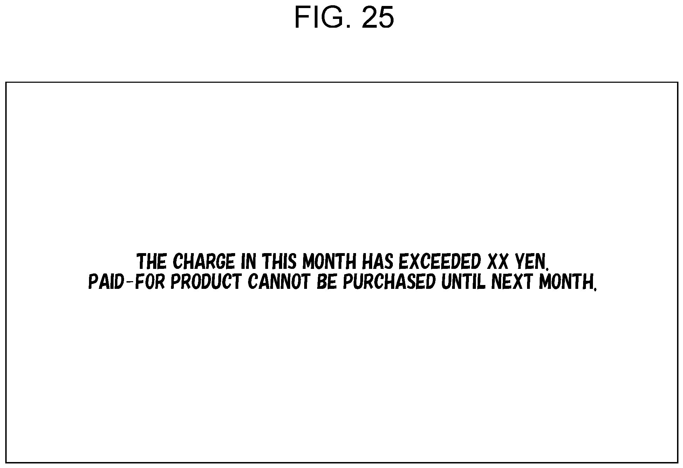

The store presentation controller 62 may set an upper limit amount to be charged daily, monthly, or yearly, and when the total charge exceeds the upper limit amount in trading of a game element, which involves charging, may notify of the situation. For example, the store presentation controller 62 may calculate a monthly total charge from the purchase history information of the player information database D1, and when the total charge exceeds a predetermined amount, may notify of the situation in trading of game elements. Fig. 25 is a view illustrating an example of a notification made when the total charge exceeds a predetermined amount. With this configuration, excessive charging can be avoided, and particularly, people who do not have a solid financial base, such as minors can be protected.

### Modification 2 of Embodiment

The store presentation controller 62 may set an upper limit to the possessable amount of in-game currency. For example, when the player purchases new in-game currency on the in-game currency providing screen, the store presentation controller 62 refers to the possessed currency information of the player information database D1, and when purchase of the new in-game currency causes the possessed currency units (the total of the paid-for currency units and the free of charge currency units) to exceed a predetermined amount, presents a selection button for in-game currency in a distinguishable manner from the other selection buttons. When the selection button is selected, the store presentation controller 62 notifies that the upper limit of possessable in-game currency is exceeded, and prohibits the purchase of the new in-game currency.

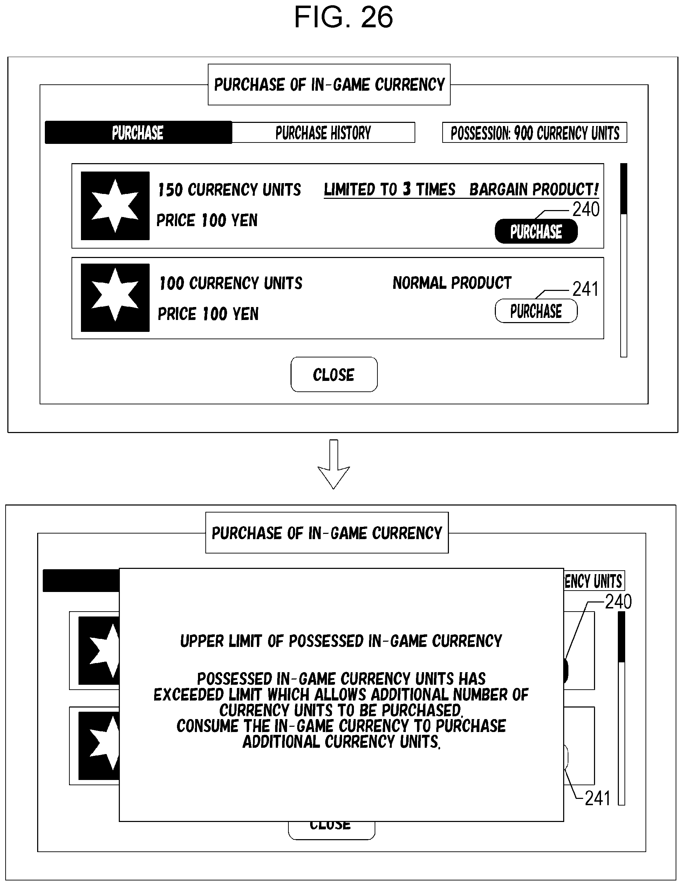

Fig. 26 shows views for explaining modification 2 of the embodiment. In the example of Fig. 26, the upper limit of possessed currency is set to 1000. When the bargain product is purchased, the total of possessed in-game currency units is 1050 which exceeds the upper limit 1000, but when a normal product is purchased, the total is 1000 which does not exceed the upper limit 1000. Thus, a button 240 to select the bargain product is presented as unselectable in black, and a button 241 to select the normal product is presented as selectable in white. Thus, the player cannot select the bargain product. In addition, when the player selects the button 240, the following message is displayed: "the possessed in-game currency has exceeded additionally purchasable currency units. Consume in-game currency to purchase new product.

With this configuration, in-game currency more than necessary does not need to be possessed, excessive charging can be avoided, and particularly, people who do not have a solid financial base, such as minors can be protected.

Although the present invention has been described by way of a preferred embodiment above, the present invention is not necessarily limited to the aforementioned embodiment, and various modifications may be made within the scope of the technical idea.

Part or all of the aforementioned embodiment is described as in the appendix below, but is not limited thereto.

### [Appendix 1]

A program causing a computer to function as
a provision control unit configured to provide a game element used for trading in a game based on one of a first provided amount and a second provided amount which are exchangeable with a predetermined price,
wherein the provision control unit is configured to perform control so that a number of times for which the game element is providable based on the second provided amount is smaller than a number of times for which the game element is providable based on the first provided amount.

### [Appendix 2]

The program according to Appendix 1,
wherein the second provided amount is greater than the first provided amount.

### [Appendix 3]

The program according to Appendix 1 or 2,
wherein the provision control unit is configured to impose restrictions on the number of times for which the game element is providable based on the second provided amount, and not to impose restrictions on the number of times for which the game element is providable based on the first provided amount.

### [Appendix 4]

The program according to any one of Appendices 1 to 3,
wherein the provision control unit is configured to, under a condition that the number of times for which the game element is provided based on the second provided amount has not reached an upper limit, selectably control one of the first provided amount and the second provided amount.

### [Appendix 5]

The program according to any one of Appendices 1 to 4,
wherein the provision control unit is configured to perform control so that the game element is providable at all times based on the first provided amount, and the game element is providable only in a specific time period based on the second provided amount.

### [Appendix 6]

The program according to any one of Appendices 1 to 5,
wherein the provision control unit is configured to, under a condition that the number of times for which the game element is provided based on the second provided amount has not reached an upper limit, notify of a price needed for provision of the game element based on the second provided amount.

### [Appendix 7]

The program according to any one of Appendices 1 to 6,
wherein the provision control unit is configured to, under a condition that the number of times for which the game element is provided based on the second provided amount has reached an upper limit, notify that the number of times has reached the upper limit.

### [Appendix 8]

A provision management device comprising
a provision control unit configured to provide a game element used for trading in a game based on one of a first provided amount and a second provided amount which are exchangeable with a predetermined price,
wherein the provision control unit is configured to perform control so that a number of times for which the game element is providable based on the second provided amount is smaller than a number of times for which the game element is providable based on the first provided amount.

### [Appendix 9]

A program causing a computer to function as:
a presentation control unit configured to selectably present provision of a game element based on a first provided amount exchangeable with a predetermined price, and provision of a game element based on a second provided amount exchangeable with the predetermined price; and
a grant control unit configured to grant the game element based on selected one of the first provided amount and the second provided amount,
wherein the game element is used for trading in a game, and the grant control unit is configured to perform control so that a number of times for which the game element is grantable based on the second provided amount is smaller than a number of times for which the game element is grantable based on the first provided amount.

### [Appendix 10]

The program according to Appendix 9,
wherein the second provided amount is greater than the first provided amount.

### [Appendix 11]

The program according to Appendix 9 or 10,
wherein the presentation control unit is configured to, when a number of times for which the game element is granted based on the second provided amount has reached an upper limit, disable selection of provision of the game element based on the second provided amount.

### [Appendix 12]

The program according to any one of Appendices 1 to 11,
wherein the presentation control unit is configured to, under a condition that the number of times for which the game element is granted based on the second provided amount has not reached an upper limit, selectably present both provision of the game element based on the first provided amount and the second provided amount.

### [Appendix 13]

The program according to any one of Appendices 1 to 12,
wherein the presentation control unit is configured to present the game element based on the first provided amount as selectable at all times, and to present the game element based on the second provided amount as selectable only in a specific time period.

### [Appendix 14]

The program according to any one of Appendices 1 to 13,
wherein the presentation control unit is configured to, under a condition that the number of times for which the game element is granted based on the second provided amount has not reached an upper limit, notify of a price needed for provision of the game element based on the second provided amount.

### [Appendix 15]

The program according to any one of Appendices 1 to 14,
wherein the presentation control unit is configured to, under a condition that the number of times for which the game element is granted based on the second provided amount has reached an upper limit, notify that the number of times has reached the upper limit.

### [Appendix 16]

The program according to any one of Appendices 1 to 15,
wherein the presentation control unit is configured to present a first screen including an amount of the game element possessed and another game element exchangeable with the game element, and upon selection of the amount of the game element possessed, close the first screen and make a transition to a second screen that presents a game element based on the first provided amount and a game element based on the second provided amount.

### [Appendix 17]

The program according to any one of Appendices 1 to 16,
wherein another game element exchangeable with the game element is usable for a fighting game.

### [Appendix 18]

The program according to any one of Appendices 1 to 17,
wherein the presentation control unit is configured to, under a condition that an amount of the game element to be exchanged for obtaining selected another game element is insufficient on the first screen, make a transition to the second screen.

### [Appendix 19]

A gaming device comprising:
a presentation control unit configured to selectably present provision of a game element based on a first provided amount exchangeable with a predetermined price, and provision of a game element based on a second provided amount exchangeable with the predetermined price; and
a grant control unit configured to grant the game element based on selected one of the first provided amount and the second provided amount,
wherein the game element is used for trading in a game, and
the grant control unit is configured to perform control so that a number of times for which the game element is granted based on the second provided amount is smaller than a number of times for which the game element is granted based on the first provided amount.

## Claims

1. A computer program product comprising instructions which, when the program is executed by a computer, cause the computer to:
provide a game element used for trading in a game based on one of a first provided amount and a second provided amount which are exchangeable with a predetermined price; and
perform control so that a number of times for which the game element is providable based on the second provided amount is smaller than a number of times for which the game element is providable based on the first provided amount.

2. The computer program product according to Claim 1,
wherein the second provided amount is greater than the first provided amount.

3. The computer program product according to Claim 1 or 2, further configured to cause the computer to impose restrictions on the number of times for which the game element is providable based on the second provided amount, and not to impose restrictions on the number of times for which the game element is providable based on the first provided amount.

4. The computer program product according to Claim 3, further configured to cause the computer to, under a condition that the number of times for which the game element is provided based on the second provided amount has not reached an upper limit, selectably control one of the first provided amount and the second provided amount.

5. The computer program product according to Claim 4, further configured to cause the computer to perform control so that the game element is providable at all times based on the first provided amount, and the game element is providable only in a specific time period based on the second provided amount.

6. The computer program product according to Claim 4, further configured to cause the computer to, under a condition that the number of times for which the game element is provided based on the second provided amount has not reached an upper limit, notify of a price needed for provision of the game element based on the second provided amount.

7. The computer program product according to Claim 4, further configured to cause the computer to, under a condition that the number of times for which the game element is provided based on the second provided amount has reached an upper limit, notify that the number of times has reached the upper limit.

8. The computer program product according to any one of Claims 1-7 and further configured to cause the computer to selectably present provision of the game element based on the first provided amount exchangeable with a predetermined price, and provision of the game element based on the second provided amount exchangeable with the predetermined price.

9. The computer program product according to Claim 8, further configured to cause the computer to, when a number of times for which the game element is granted based on the second provided amount has reached an upper limit, disable selection of provision of the game element based on the second provided amount.

10. The computer program product according to Claim 9, further configured to cause the computer to, under a condition that the number of times for which the game element is granted based on the second provided amount has not reached an upper limit, selectably present both provision of the game element based on the first provided amount and the second provided amount.

11. The computer program product according to Claim 9-10, further configured to cause the computer to present the game element based on the first provided amount as selectable at all times, and to present the game element based on the second provided amount as selectable only in a specific time period.

12. The computer program product according to Claim 9-11, further configured to cause the computer to, under a condition that the number of times for which the game element is granted based on the second provided amount has not reached an upper limit, notify of a price needed for provision of the game element based on the second provided amount.

13. The computer program product according to Claim 9-12, further configured to cause the computer to, under a condition that the number of times for which the game element is granted based on the second provided amount has reached an upper limit, notify that the number of times has reached the upper limit.

14. The computer program product according to Claim 9-13, further configured to cause the computer to present a first screen including an amount of the game element possessed and another game element exchangeable with the game element, and upon selection of the amount of the game element possessed, close the first screen and make a transition to a second screen that presents a game element based on the first provided amount and a game element based on the second provided amount.

15. The computer program product according to Claim 14, wherein another game element exchangeable with the game element is usable for a fighting game.

16. The computer program product according to Claim 14, further configured to cause the computer to, under a condition that an amount of the game element to be exchanged for obtaining selected another game element is insufficient on the first screen, make a transition to the second screen.

17. A game system comprising
a game execution controller (61) configured to provide a game element used for trading in a game based on one of a first provided amount and a second provided amount which are exchangeable with a predetermined price,
wherein the game execution controller (61) is configured to perform control so that a number of times for which the game element is providable based on the second provided amount is smaller than a number of times for which the game element is providable based on the first provided amount.

18. The game system according to claims 17 and further comprising:
a store presentation controller (62) configured to selectably present provision of the game element based on the first provided amount exchangeable with a predetermined price, and provision of the game element based on the second provided amount exchangeable with the predetermined price.
